# EUROPEAN PATENT APPLICATION

(11) **EP 4 345 068 A1**
(43) Date of publication of application: **03.04.2024**
(21) Application number: 22860308.0
(22) Date of filing: 16.08.2022
(51) Int. Cl.: C02F 1/00, F01K 7/32, F01K 25/10

(54) **SUPERCRITICAL CARBON DIOXIDE CYCLE BASED POWER GENERATION-BRINE LITHIUM EXTRACTION COUPLING SYSTEM**

(30) Priority: 26.08.2021 CN 202122035573 U
(71) Applicant: BYD Company Limited, Shenzhen, Guangdong 518118 (CN)
(72) Inventor: MA, Yuegeng, Shenzhen, Guangdong 518118 (CN); LIAN, Junlan, Shenzhen, Guangdong 518118 (CN); LIN, Hongye, Shenzhen, Guangdong 518118 (CN)
(74) Representative: Gulde & Partner
(86) International application number: PCT/CN2022/112650
(87) International publication number: WO 2023/024962

(57) **Abstract**

A coupling system of supercritical carbon dioxide cycle power generation and lithium extraction from brine is provided. The system includes an absorption heat pump unit (100), a supercritical carbon dioxide cycle power generation unit (200), and a lithium extraction from brine unit (300). A brine inlet (32) of the lithium extraction from brine unit (300) is in communication with a to-be-heated material inlet (30) of the absorption heat pump unit (100). A heated material outlet (31) of the absorption heat pump unit (100) is in communication with a raw material inlet (33) of the lithium extraction from brine unit (300). A carbon dioxide cycle cold end outlet (36) of the supercritical carbon dioxide cycle power generation unit (200) is in communication with a heating medium inlet (34) of the lithium extraction from brine unit (300) and/or a driving heat source inlet (28) of the absorption heat pump unit (100). A carbon dioxide cycle cold end inlet (37) of the supercritical carbon dioxide cycle power generation unit (200) is in communication with a heating medium outlet (35) of the lithium extraction from brine unit (300) and/or a driving heat source outlet (29) of the absorption heat pump unit (100).

## Description

### CROSS-REFERENCE TO RELATED APPLICATIONS

This application claims priority to and benefits of Chinese Patent Application No. 202122035573.6, filed on August 26, 2021 and entitled "COUPLING SYSTEM OF SUPERCRITICAL CARBON DIOXIDE CYCLE POWER GENERATION AND LITHIUM EXTRACTION FROM BRINE". The entire content of the above-referenced application is incorporated herein by reference.

### FIELD

The present disclosure relates to the field of lithium extraction from brine, and specifically, to a coupling system of supercritical carbon dioxide cycle power generation and lithium extraction from brine.

### BACKGROUND

Supercritical carbon dioxide cycle has a great application prospect in power production such as coal-fired power generation, concentrated solar power generation, geothermal power generation, and waste heat recovery due to high thermal cycle efficiency, compact structure, and small footprint. The waste heat temperature of a cooler at a supercritical carbon dioxide cycle cold end reaches 100-200°C. In a supercritical carbon dioxide cycle power generation system that operates independently, it is necessary to cool the carbon dioxide working fluid to 32-40°C before entering a compressor to ensure the high efficiency of the cycle power generation system. This cooling step not only wastes a lot of low-grade waste heat, but also requires an adequate supply of cooling water. The supply of industrial water is relatively limited and there is a strong demand for water saving and consumption reduction for dry and water-scarce Northwest China such as Qinghai. This contradicts the large consumption of cooling water in the supercritical carbon dioxide cycle power generation system.

According to another aspect, lithium and its compounds are widely used and of important strategic value for the development of national society. Salt lakes in Western China such as Qinghai are important potential production areas of lithium resources. The lithium resources in salt lakes account for more than 60% of the total amount in the country. However, the concentration of lithium in salt lakes in China is relatively low. Consequently, extraction of lithium salt from salt lake brines requires a complex process and a large amount of low-grade thermal energy consumption. The low-grade thermal energy is generally supplied by steam, which also consumes a certain amount of industrial water. The lithium precipitation reaction requires a high temperature to maintain high yield and high lithium carbonate purity. The brine in an adsorption tower can help increase the adsorption capacity of an adsorbent at a high adsorption temperature, thereby increasing the adsorption yield. However, in a separate lithium extraction from brine system, a large amount of steam is required to increase and maintain the temperature of lithium precipitation and adsorption, which significantly increases the operating cost of the lithium extraction from brine process.

In the related art, the supercritical carbon dioxide cycle power generation system and the lithium extraction from brine system have drawbacks such as large consumption of industrial water and steam, which significantly increases the operating cost of the power generation system and the lithium extraction from brine system. The solution of increasing the working temperature of the lithium precipitation reaction section and adsorption section in the lithium extraction from brine system has large energy and steam consumption, which is not technically competitive due to the high input cost of separately operating the lithium extraction from brine system. The direct discharge of waste heat from the cold end of the supercritical carbon dioxide power generation system also wastes a large amount of thermal energy resources and consumes a large amount of cooling water.

### SUMMARY

An objective of the present disclosure is to provide a coupling system of supercritical carbon dioxide cycle power generation and lithium extraction from brine. The system can effectively reduce the total energy consumption of power generation and lithium extraction, reduce the total equipment investment of the system, and significantly improve the efficiency of adsorption and lithium precipitation in the lithium extraction from brine system.

To achieve the foregoing objective, the present disclosure provides a coupling system of supercritical carbon dioxide cycle power generation and lithium extraction from brine. The system includes an absorption heat pump unit, a supercritical carbon dioxide cycle power generation unit, and a lithium extraction from brine unit. The absorption heat pump unit includes a driving heat source inlet, a driving heat source outlet, a to-be-heated material inlet, and a heated material outlet. The lithium extraction from brine unit includes a brine inlet and a lithium extraction device. The lithium extraction device includes a raw material inlet, a heating medium inlet, and a heating medium outlet. The brine inlet is in communication with the to-be-heated material inlet of the absorption heat pump unit. The heated material outlet is in communication with the raw material inlet of the lithium extraction device. The supercritical carbon dioxide cycle power generation unit includes a carbon dioxide cycle cold end outlet and a carbon dioxide cycle cold end inlet. The carbon dioxide cycle cold end outlet is in communication with the heating medium inlet of the lithium extraction from brine unit and/or the driving heat source inlet of the absorption heat pump unit. The carbon dioxide cycle cold end inlet of the supercritical carbon dioxide cycle power generation unit is in communication with the heating medium outlet of the lithium extraction from brine unit and/or the driving heat source outlet.

Optionally, the lithium extraction device includes an evaporation concentration device and a lithium precipitation reaction device. The carbon dioxide cycle cold end outlet is in communication with the heating medium inlet of the evaporation concentration device. A heating medium outlet of the evaporation concentration device is in communication with a heating medium inlet of the lithium precipitation reaction device. The heating medium outlet of the lithium precipitation reaction device is in communication with the driving heat source inlet of the absorption heat pump unit.

Optionally, the evaporation concentration device is a single-stage concentration device or a multi-stage concentration device.

Optionally, the evaporation concentration device includes a first heater and a gas-liquid separator, and the lithium precipitation reaction device includes a second heater and a lithium precipitation reactor. The lithium extraction from brine unit further includes an adsorption device and a membrane separation device that are in sequential communication. A lithium-rich permeate outlet of the membrane separation device is in communication with an endothermic side inlet of the first heater. An endothermic side outlet of the first heater is in communication with an inlet of the gas-liquid separator. A liquid phase outlet of the gas-liquid separator is in communication with an endothermic side inlet of the second heater. An endothermic side outlet of the second heater is in communication with a raw material inlet of the lithium precipitation reactor. The carbon dioxide cycle cold end outlet is in communication with an exothermic side inlet of the first heater. An exothermic side outlet of the first heater is in communication with an exothermic side inlet of the second heater. An exothermic side outlet of the second heater is in communication with the driving heat source inlet of the absorption heat pump unit.

Optionally, the lithium extraction device further includes a preheater. An endothermic side inlet of the preheater is in communication with the lithium-rich permeate outlet of the membrane separation device. An endothermic side outlet of the preheater is in communication with the endothermic side inlet of the first heater. A gas phase outlet of the gas-liquid separator is in communication with an exothermic side inlet of the preheater.

Optionally, the adsorption device includes a to-be-adsorbed material inlet, and the brine inlet is in communication with the to-be-adsorbed material inlet of the adsorption device.

Optionally, the adsorption device includes an adsorption tower, and the membrane separation device includes a nanofiltration membrane section.

Optionally, the lithium precipitation reaction device further includes a sodium carbonate solution inlet, and the sodium carbonate solution inlet is in communication with the endothermic side inlet of the second heater.

Optionally, the sodium carbonate solution inlet is in communication with a sodium carbonate solution tank.

Optionally, the lithium extraction from brine unit further includes a strainer, and the strainer is disposed between the brine inlet and the to-be-heated material inlet of the absorption heat pump unit.

Optionally, the absorption heat pump unit includes a first type of absorption heat pump, and the first type of absorption heat pump includes a generator, a condenser, an absorber, and a desorber. An exothermic side inlet of the generator forms the driving heat source inlet to be in communication with the heating medium outlet of the lithium extraction from brine unit. An exothermic side outlet of the generator forms the driving heat source outlet to be in communication with the carbon dioxide cycle cold end inlet. An endothermic side inlet of the desorber forms the to-be-heated material inlet to be in communication with the brine inlet. An endothermic side outlet of the desorber is in communication with an endothermic side inlet of the condenser of the absorption heat pump unit. An endothermic side outlet of the condenser forms the heated material outlet to be in communication with the raw material inlet of the lithium extraction device.

Optionally, the first type of absorption heat pump is a water and lithium bromide heat pump and an ammonia and water heat pump.

Optionally, the first type of absorption heat pump further includes a solution exchanger, a steam valve, a solution pump, and a solution valve.

Optionally, the first type of absorption heat pump is a single-stage absorption heat pump or a multi-stage absorption heat pump.

Optionally, the supercritical carbon dioxide cycle power generation unit further includes an electric generator, a turbine, a high-temperature regenerator, and a low-temperature regenerator. The electric generator is coaxially connected to the turbine. An outlet of the turbine, an exothermic side of the high-temperature regenerator, and an exothermic side inlet of the low-temperature regenerator are in sequential communication. An exothermic side outlet of the low-temperature regenerator is in communication with the carbon dioxide cycle cold end outlet.

Optionally, the supercritical carbon dioxide cycle power generation unit further includes a cooler, a first compressor, and a third heater. The carbon dioxide cycle cold end inlet, an exothermic side of the cooler, and an inlet of the first compressor are in sequential communication. An outlet of the first compressor, an endothermic side of the low-temperature regenerator, an endothermic side of the high-temperature regenerator, and an endothermic side inlet of the third heater are in sequential communication. An endothermic side outlet of the third heater is in communication with an inlet of the turbine.

Optionally, the supercritical carbon dioxide cycle power generation unit further includes a three-way diverting control valve, a three-way mixing control valve, and a second compressor. An inlet of the three-way diverting control valve is in communication with the exothermic side outlet of the low-temperature regenerator. A first outlet of the three-way diverting control valve forms the carbon dioxide cycle cold end outlet. A second outlet of the three-way diverting control valve is in communication with an inlet of the second compressor. An outlet of the second compressor is in communication with a first inlet of the three-way mixing control valve. A second inlet of the three-way mixing control valve is in communication with the endothermic side outlet of the low-temperature regenerator. An outlet of the three-way mixing control valve is in communication with the endothermic side inlet of the high-temperature regenerator.

Optionally, the three-way diverting control valve is configured to control a flow rate of carbon dioxide used in the lithium extraction from brine unit.

Optionally, the supercritical carbon dioxide cycle power generation unit is a recompression supercritical carbon dioxide cycle power generation unit.

Optionally, the supercritical carbon dioxide cycle power generation unit is a simple-regenerative-cycle supercritical carbon dioxide cycle power generation unit or a partial-cooling-cycle supercritical carbon dioxide cycle power generation unit.

Through the foregoing technical solution, the present disclosure provides the coupling system with the supercritical carbon dioxide cycle system and the lithium extraction from brine system integrated. This system does not directly release the waste heat carried by carbon dioxide working fluid at the supercritical carbon dioxide cycle cold end in the cooler, but recycles the waste heat in a cascade as the heat source in the lithium extraction from brine system. This system achieves "quality in exchange for quantity" of part of the waste heat by using the absorption heat pump based on the principle of "temperature zone matching, energy cascade utilization", thereby organically coupling the exothermic characteristics of the supercritical carbon dioxide cycle system with the endothermic characteristics of the lithium extraction from brine system. Compared with a supercritical carbon dioxide cycle system and a lithium extraction from salt lake system that are operated separately, the coupling system provided by the present disclosure can effectively reduce the total energy consumption of power generation and lithium extraction, reduce the total equipment investment of the system, and significantly improve the efficiency of adsorption and lithium precipitation in the lithium extraction from brine system.

Other features and advantages of the present disclosure will be described in detail in the following detailed description part.

### BRIEF DESCRIPTION OF THE DRAWINGS

The accompanying drawings are intended to provide further understanding of the present disclosure and constitute a part of this specification. The accompanying drawings and the implementations below are used together for explaining the present disclosure rather than constituting a limitation to the present disclosure. In the accompanying drawings:

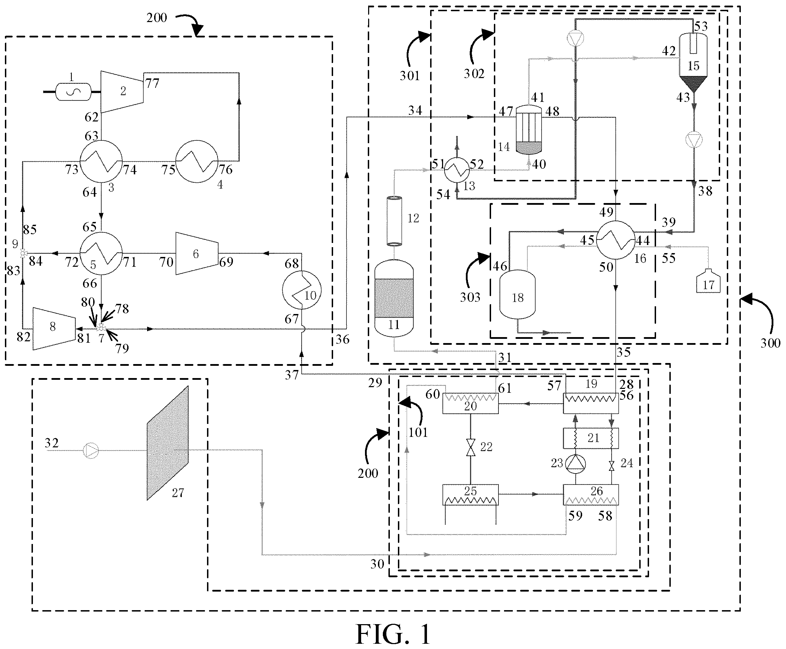

FIG. 1 is a process flowchart of an implementation of a coupling system of supercritical carbon dioxide cycle power generation and lithium extraction from brine according to the present disclosure.

1. Electric generator, 2. Turbine, 3. High-temperature regenerator, 4. Third heater, 5. Low-temperature regenerator, 6. First compressor, 7. Three-way diverting control valve, 8. Second compressor, 9. Three-way mixing control valve, 10. Cooler, 11. Adsorption tower, 12. Nanofiltration membrane section, 13. Preheater, 14. First heater, 15. Gas-liquid separator, 16. Second heater, 17. Sodium carbonate solution tank, 18. Lithium precipitation reactor, 19. Generator, 20. Condenser, 21. Solution exchanger, 22. Steam valve, 23. Solution pump, 24. Solution valve, 25. Absorber, 26. Desorber, 27. Strainer, 28. Driving heat source inlet, 29. Driving heat source outlet, 30. To-be-heated material inlet, 31. Heated material outlet, 32. Brine inlet, 33. Raw material inlet of lithium extraction device, 34. Heating medium inlet of lithium extraction device, 35. Heating medium outlet of lithium extraction device, 36. Carbon dioxide cycle cold end outlet, 37. Carbon dioxide cycle cold end inlet, 38. Heating medium outlet of evaporation concentration device, 39. Heating medium inlet of lithium precipitation reaction device, 40. Endothermic side inlet of first heater, 41. Endothermic side outlet of first heater, 42. Inlet of gas-liquid separator, 43. Liquid phase outlet of gas-liquid separator, 44. Endothermic side inlet of second heater, 45. Endothermic side outlet of second heater, 46. Raw material inlet of lithium precipitation reactor, 47. Exothermic side inlet of first heater, 48. Exothermic side outlet of first heater, 49. Exothermic side inlet of second heater, 50. Exothermic side outlet of second heater, 51. Endothermic side inlet of preheater, 52. Endothermic side outlet of preheater, 53. Gas phase outlet of gas-liquid separator, 54. Exothermic side inlet of preheater, 55. Sodium carbonate solution inlet, 56. Exothermic side inlet of generator, 57. Exothermic side outlet of generator, 58. Endothermic side inlet of desorber, 59. Endothermic side outlet of desorber, 60. Endothermic side inlet of condenser, 61. Endothermic side outlet of condenser, 62. Outlet of turbine, 63. Exothermic side inlet of high-temperature regenerator, 64. Exothermic side outlet of high-temperature regenerator, 65. Exothermic side inlet of low-temperature regenerator, 66. Exothermic side outlet of low-temperature regenerator, 67. Exothermic side inlet of cooler, 68. Exothermic side outlet of cooler, 69. Inlet of first compressor, 70. Outlet of first compressor, 71. Endothermic side inlet of low-temperature regenerator, 72. Endothermic side outlet of low-temperature regenerator, 73. Endothermic side inlet of high-temperature regenerator, 74. Endothermic side outlet of high-temperature regenerator, 75. Endothermic side inlet of third heater, 76. Endothermic side outlet of third heater, 77. Inlet of turbine, 78. Inlet of three-way diverting control valve, 79. First outlet of three-way diverting control valve, 80. Second outlet of three-way diverting control valve, 81. Inlet of second compressor, 82. Outlet of compressor, 83. First inlet of three-way mixing control valve, 84. Second inlet of three-way mixing control valve, 85. Outlet of three-way mixing control valve, 100. Absorption heat pump unit, 101. First type of absorption heat pump, 200. Supercritical carbon dioxide cycle power generation unit, 300. Lithium extraction from brine unit, 301. Lithium extraction device, 302. Evaporation concentration device, and 303. Lithium precipitation reaction device.

### DETAILED DESCRIPTION

Implementations of the present disclosure are described in detail below. It should be understood that the implementations described herein are merely used for describing and explaining the present disclosure, but are not intended to limit the present disclosure.

As shown in FIG. 1, the present disclosure provides a coupling system of supercritical carbon dioxide cycle power generation and lithium extraction from brine. The system includes an absorption heat pump unit 100, a supercritical carbon dioxide cycle power generation unit 200, and a lithium extraction from brine unit 300. The absorption heat pump unit 100 includes a driving heat source inlet 28, a driving heat source outlet 29, a to-be-heated material inlet 30, and a heated material outlet 31. The lithium extraction from brine unit 300 includes a brine inlet 32 and a lithium extraction device 301. The lithium extraction device 301 includes a raw material inlet 33, a heating medium inlet 34, and a heating medium outlet 35. The brine inlet 32 is in communication with the to-be-heated material inlet 30 of the absorption heat pump unit 100. The heated material outlet 31 is in communication with the raw material inlet 33 of the lithium extraction device 301. The supercritical carbon dioxide cycle power generation unit 200 includes a carbon dioxide cycle cold end outlet 36 and a carbon dioxide cycle cold end inlet 37. The carbon dioxide cycle cold end outlet 36 is in communication with the heating medium inlet 34 of the lithium extraction from brine unit 300 and/or the driving heat source inlet 28 of the absorption heat pump unit 100. The carbon dioxide cycle cold end inlet 37 of the supercritical carbon dioxide cycle power generation unit 200 is in communication with the heating medium outlet 35 of the lithium extraction from brine unit 300 and/or the driving heat source outlet 29.

The inventor of the present disclosure found that the waste heat exothermic temperature section at the cold end of the existing supercritical carbon dioxide cycle power generation system is basically matched with the heating medium endothermic temperature section of the lithium extraction from brine system, for example, may be used as a heating medium for increasing and maintaining the temperature during lithium precipitation and adsorption in the lithium extraction from brine system. The coupling system provided by the present disclosure couples the supercritical carbon dioxide cycle power generation unit with the lithium extraction from brine unit 300 through the absorption heat pump unit 100, which does not directly release the waste heat carried by carbon dioxide working fluid at the supercritical carbon dioxide cycle cold end in the cooler, but recycles the waste heat in a cascade as the heat source in the lithium extraction from brine system. This system achieves "quality in exchange for quantity" of part of the waste heat by using the absorption heat pump based on the principle of "temperature zone matching, energy cascade utilization", thereby organically coupling the exothermic characteristics of the supercritical carbon dioxide cycle system with the endothermic characteristics of the lithium extraction from brine system. Compared with a supercritical carbon dioxide cycle system and a lithium extraction from salt lake system that are operated separately, the novel coupling system provided by the present disclosure can effectively reduce the total energy consumption of power generation and lithium extraction, reduce the total equipment investment of the system, and significantly improve the efficiency of the lithium extraction from brine system.

According to the present disclosure, the carbon dioxide cycle cold end outlet 36 of the supercritical carbon dioxide cycle power generation unit 200, the heating medium inlet 34 of the lithium extraction from brine unit 300, and the driving heat source inlet 28 of the absorption heat pump unit 100 may be connected in series, in parallel, or in series and parallel. The heating medium inlet 34 of the lithium extraction from brine unit 300 is provided from a device that needs to consume heat in the lithium extraction from brine unit 300, for example, including one or more of a heating medium inlet from the lithium precipitation reaction step, a heating medium inlet from the adsorption step, and a heating medium inlet from the evaporation concentration step.

In an implementation of the present disclosure, the carbon dioxide cycle cold end outlet 36 of the supercritical carbon dioxide cycle power generation unit 200 is in sequential communication with the heating medium inlet 34 of the lithium extraction from brine unit 300 and the driving heat source inlet 28 of the absorption heat pump unit 100. According to an embodiment of the present disclosure, the carbon dioxide cycle cold end outlet 36 is in communication with the heating medium inlet 34 of the lithium extraction from brine unit 300, the heating medium outlet 35 of the lithium extraction from brine unit 300 is in communication with the driving heat source inlet 28 of the absorption heat pump unit 100, and the driving heat source outlet 29 is in communication with the carbon dioxide cycle cold end inlet 37 of the supercritical carbon dioxide cycle power generation unit 200.

In another implementation of the present disclosure, the carbon dioxide cycle cold end outlet 36 of the supercritical carbon dioxide cycle power generation unit 200 is in sequential communication with the driving heat source inlet 28 of the absorption heat pump unit 100 and the heating medium inlet 34 of the lithium extraction from brine unit 300. According to an embodiment of the present disclosure, the carbon dioxide cycle cold end outlet 36 is in communication with the driving heat source inlet 28 of the absorption heat pump unit 100, the driving heat source outlet 29 is in communication with the heating medium inlet 34 of the lithium extraction from brine unit 300, and the heating medium outlet 35 of the lithium extraction from brine unit 300 is in communication with the carbon dioxide cycle cold end inlet 37 of the supercritical carbon dioxide cycle power generation unit 200.

In another implementation of the present disclosure, the carbon dioxide cycle cold end outlet 36 is in communication with the driving heat source inlet 28 of the absorption heat pump unit 100 and the heating medium inlet 34 of the lithium extraction from brine unit 300 separately, and the driving heat source outlet 29 and the heating medium outlet 35 of the lithium extraction from brine unit 300 are separately in communication with the carbon dioxide cycle cold end inlet 37 of the supercritical carbon dioxide cycle power generation unit 200, that is, the driving heat source of the absorption heat pump unit 100 and the heating medium side of the lithium extraction from brine unit 300 are connected in parallel.

The inventor of the present disclosure further found that the waste heat carried by carbon dioxide working fluid at the cold end of the supercritical carbon dioxide cycle power generation unit can be recycled in a cascade as the heat source during evaporation concentration and lithium precipitation in the lithium extraction from brine system. In an implementation of the present disclosure, the lithium extraction device 301 includes an evaporation concentration device 302 and a lithium precipitation reaction device 303; the carbon dioxide cycle cold end outlet 36 is in communication with the heating medium inlet 34 of the evaporation concentration device 302, and a heating medium outlet 38 of the evaporation concentration device 302 is in communication with a heating medium inlet 39 of the lithium precipitation reaction device 303, so that the carbon dioxide working fluid at the cold end of the supercritical carbon dioxide cycle power generation unit is used as the heating medium in the evaporation concentration device and the heating medium in the lithium precipitation reaction device sequentially; and further, the heating medium outlet 35 of the lithium precipitation reaction device 303 is in communication with the driving heat source inlet 28 of the absorption heat pump unit 100, to further recycle the waste heat from the carbon dioxide working fluid at the cold end. In other words, the heating medium inlet 34 of the evaporation concentration device 302 is used as the heating medium inlet 34 of the lithium extraction device 301 and the heating medium inlet 34 of the lithium extraction from brine unit 300; and the heating medium outlet 35 of the lithium precipitation reaction device 303 is used as the heating medium outlet 35 of the lithium extraction device 301 and the heating medium outlet 35 of the lithium extraction from brine unit 300.

In an implementation, for example, the evaporation concentration device 302 is a single-stage evaporation concentration device or a multi-stage evaporation concentration device; and further, the evaporation concentration device 302 includes a first heater 14 and a gas-liquid separator 15, and the lithium precipitation reaction device 303 includes a second heater 16 and a lithium precipitation reactor 18. Further, an endothermic side outlet 41 of the first heater 14 is in communication with an inlet 42 of the gas-liquid separator 15, a liquid phase outlet 43 of the gas-liquid separator 15 is in communication with an endothermic side inlet 44 of the second heater 16, and an endothermic side outlet 45 of the second heater 16 is in communication with a raw material inlet 46 of the lithium precipitation reactor 18; the carbon dioxide cycle cold end outlet 36 is in communication with an exothermic side inlet 47 of the first heater 14, and an exothermic side outlet 48 of the first heater 14 is in communication with an exothermic side inlet 49 of the second heater 16, so that the carbon dioxide working fluid as the heating medium at the cold end of the supercritical carbon dioxide cycle power generation unit enters the first heater 14 of the evaporation concentration device 302 and the second heater 16 of the lithium precipitation reaction device 303 sequentially; and further, an exothermic side outlet 50 of the second heater 16 is in communication with the driving heat source inlet 28 of the absorption heat pump unit 100.

Further, to improve the lithium extraction effect of the lithium extraction from brine unit 300, the lithium extraction from brine unit 300 further includes an adsorption device and a membrane separation device that are in sequential communication; the brine inlet 32 of the lithium extraction from brine unit 300 may be in communication with a to-be-adsorbed material inlet of the adsorption device, and a lithium-rich permeate outlet of the membrane separation device is in communication with an endothermic side inlet 40 of the first heater 14, so that the brine raw material entering the lithium extraction from brine unit 300 is sequentially subjected to adsorption to remove impurities and membrane separation to remove divalent ions before entering the evaporation concentration device 302. The adsorption device includes, for example, an adsorption tower 11. An adsorbent is a conventional type in the art. The membrane separation device includes, for example, a nanofiltration membrane section 12.

In an implementation, to further improve the energy utilization efficiency of the device, the lithium extraction device 301 further includes a preheater 13; an endothermic side inlet 51 of the preheater 13 is in communication with the lithium-rich permeate outlet of the membrane separation device, and an endothermic side outlet 52 of the preheater 13 is in communication with the endothermic side inlet 40 of the first heater 14; and a gas phase outlet 53 of the gas-liquid separator 15 is in communication with an exothermic side inlet 54 of the preheater 13, to preheat the brine that will enter the evaporation concentration device 302 with the heat of the steam separated from the gas-liquid separator 15.

In an implementation, the lithium precipitation reaction device 303 further includes a sodium carbonate solution inlet 55, and the sodium carbonate solution inlet 55 is in communication with the endothermic side inlet 44 of the second heater 16, so that the sodium carbonate solution enters the lithium precipitation reactor 18 for reaction after preheated in the second heater 16. The sodium carbonate solution inlet 55 may be in communication with a sodium carbonate solution tank 17.

In an implementation, the lithium extraction from brine unit 300 further includes a strainer 27, and the strainer 27 is disposed between the brine inlet 32 and the to-be-heated material inlet 30 of the absorption heat pump unit 100.

In other implementations of the present disclosure, the lithium extraction from brine unit 300 may further include a pre-treatment device or a post-treatment device for removing boron and iron.

According to an implementation of the present disclosure, the absorption heat pump unit 100 includes a first type of absorption heat pump 101, and the first type of absorption heat pump 101 includes a generator 19, a condenser 20, an absorber 25, and a desorber 26; an exothermic side inlet 56 of the generator 19 forms the driving heat source inlet 28 to be in communication with the heating medium outlet 35 of the lithium extraction from brine unit 300. According to an implementation, the lithium extraction device 301 of the lithium extraction from brine unit 300 includes the evaporation concentration device 302 and the lithium precipitation reaction device 303, the exothermic side inlet 56 of the generator 19 is in communication with the heating medium outlet 35 of the lithium precipitation reaction device 303.

Further, an exothermic side outlet 57 of the generator 19 forms the driving heat source outlet 29 to be in communication with the carbon dioxide cycle cold end inlet 37; and an endothermic side inlet 58 of the desorber 26 forms the to-be-heated material inlet 30 to be in communication with the brine inlet 32, an endothermic side outlet 59 of the desorber 26 is in communication with an endothermic side inlet 60 of the condenser 20 of the absorption heat pump unit 100, and an endothermic side outlet 61 of the condenser 20 forms the heated material outlet 31 to be in communication with the raw material inlet 33 of the lithium extraction device 301. In this implementation, the carbon dioxide working fluid at the cold end of the supercritical carbon dioxide cycle power generation unit 200 is used as the driving heat source of the absorption heat pump after providing heat for lithium extraction from brine, and the brine raw material is preheated through the absorption heat pump before entering the lithium extraction from brine unit 300, so as to further recycle the waste heat from the carbon dioxide working fluid at the cold end.

In an implementation, the first type of absorption heat pump 101 may be a water and lithium bromide heat bump and/or an ammonia and water heat pump. The first type of absorption heat pump 101 may further include a solution exchanger 21, a steam valve 22, a solution pump 23, and a solution valve 24. The first type of absorption heat pump 101 may be a single-stage absorption heat pump or a multi-stage absorption heat pump.

According to an implementation of the present disclosure, the supercritical carbon dioxide cycle power generation unit 200 is a recompression supercritical carbon dioxide cycle power generation unit. In other implementations of the present disclosure, the supercritical carbon dioxide cycle power generation unit 200 may be a simple-regenerative-cycle supercritical carbon dioxide cycle power generation unit or a partial-cooling-cycle supercritical carbon dioxide cycle power generation unit.

In an implementation, the supercritical carbon dioxide cycle power generation unit 200 further includes an electric generator 1, a turbine 2, a high-temperature regenerator 3, and a low-temperature regenerator 5. The electric generator 1 is coaxially connected to the turbine 2. An outlet 62 of the turbine 2, an exothermic side inlet 63 and an exothermic side outlet 64 of the high-temperature regenerator 3, and an exothermic side inlet 65 of the low-temperature regenerator 5 are in sequential communication. An exothermic side outlet 66 of the low-temperature regenerator 5 is in communication with the carbon dioxide cycle cold end outlet 36, so that the carbon dioxide working fluid from the outlet 62 of the turbine 2 passes through the high-temperature regenerator 3 and the low-temperature regenerator 5 to recycle heat, and the carbon dioxide working fluid with the recycled heat is introduced out of the supercritical carbon dioxide cycle power generation unit 200 from the carbon dioxide cycle cold end outlet 36 as the carbon dioxide working fluid at the cold end to further recycle heat therein.

In an implementation, the supercritical carbon dioxide cycle power generation unit 200 further includes a cooler 10, a first compressor 6, and a third heater 4. The carbon dioxide cycle cold end inlet 37, an exothermic side inlet 67 and an exothermic side outlet 68 of the cooler 10, and an inlet 69 of the first compressor 6 are in sequential communication. An outlet 70 of the first compressor 6, an endothermic side inlet 71 and an endothermic side outlet 72 of the low-temperature regenerator 5, an endothermic side inlet 73 and an endothermic side outlet 74 of the high-temperature regenerator 3, and an endothermic side inlet 75 of the third heater 4 are in sequential communication. An endothermic side outlet 76 of the third heater 4 is in communication with an inlet 77 of the turbine 2. In an implementation, the carbon dioxide working fluid after waste heat recycling through the lithium extraction from brine unit 300 and the absorption heat pump unit 100 returns to the supercritical carbon dioxide cycle power generation unit 200 through the carbon dioxide cycle cold end inlet 37, is cooled by the cooler 10 and compressed by the first compressor 6, and is heated sequentially through the low-temperature regenerator 5, the high-temperature regenerator 3 and the third heater 4, and enters the turbine 2 from the inlet, to complete the supercritical carbon dioxide power generation cycle. A cooling medium in the cooler is, for example, cooling water.

In an implementation of the present disclosure, the supercritical carbon dioxide cycle power generation unit 200 further includes a three-way diverting control valve 7, a three-way mixing control valve 9 and a second compressor 8. An inlet 78 of the three-way diverting control valve 7 is in communication with the exothermic side outlet 66 of the low-temperature regenerator 5. A first outlet 79 of the three-way diverting control valve 7 forms the carbon dioxide cycle cold end outlet 36, and a second outlet 80 of the three-way diverting control valve 7 is in communication with an inlet 81 of the second compressor 8. An outlet 82 of the second compressor 8 is in communication with a first inlet 83 of the three-way mixing control valve 9, a second inlet 84 of the three-way mixing control valve 9 is in communication with the endothermic side outlet 72 of the low-temperature regenerator 5. An outlet 85 of the three-way mixing control valve 9 is in communication with the endothermic side inlet 73 of the high-temperature regenerator 3. In an implementation, the degree of opening of the regulatable three-way diverting control valve 7 may be regulated according to the energy supply requirement of the lithium extraction from brine unit 300 to regulate a flow rate of carbon dioxide used in the lithium extraction from brine unit 300. Further, the flow rate of carbon dioxide used in the lithium extraction from brine system may be regulated by regulating the degree of opening of the three-way mixing control valve 9, so as to regulate the energy supply of the lithium extraction from brine system.

To further make the thermal energy of the supercritical carbon dioxide cycle power generation unit 200 match the thermal energy of the lithium extraction from brine unit, in an implementation, the net power of the supercritical carbon dioxide cycle power generation unit is 2-5 kW in response to the production of 1 ton of lithium carbonate from the lithium extraction from brine.

In an implementation of the present disclosure, as shown in FIG. 1, the supercritical carbon dioxide cycle power generation unit 200 includes an electric generator 1, the electric generator 1 is coaxially connected to a turbine 2, an outlet of the turbine 2 is connected to an exothermic side inlet 63 of a high-temperature regenerator 3, an exothermic side outlet 64 of the high-temperature regenerator 3 is connected to an exothermic side inlet 65 of a low-temperature regenerator 5, an exothermic side outlet 66 of the low-temperature regenerator 5 is connected to a three-way diverting control valve 7 with two outlets, a second outlet 80 of the three-way diverting control valve 7 is connected to an inlet 81 of a second compressor 8, an outlet 82 of the second compressor 8 is connected to a three-way mixing control valve 9, a first outlet 79 of the three-way diverting control valve 7 as a carbon dioxide cycle cold end outlet 36 is connected to an exothermic side inlet 47 of a first heater 14, an exothermic side outlet 48 of the first heater 14 is connected to an exothermic side inlet 49 of a second heater 16, an exothermic side outlet 50 of the second heater 16 is connected to an exothermic side inlet 56 of a generator 19 of an absorption heat pump, an exothermic side outlet 57 of the generator 19 is connected to an exothermic side inlet 67 of a cooler 10 as a carbon dioxide cycle cold end inlet 37, an exothermic side outlet 68 of the cooler 10 is connected to an inlet 69 of a first compressor 6, an outlet 70 of the first compressor 6 is connected to an endothermic side inlet 71 of the low-temperature regenerator 5, and a working fluid from an endothermic side outlet 72 of the low-temperature regenerator 5 enters the three-way mixing control valve 9 to rejoin working fluids from the three-way diverting control valve 7 and the second compressor 8. The rejoined working fluid enters the high-temperature regenerator 3 from an endothermic side inlet 73, an endothermic side outlet 74 of the high-temperature regenerator 3 is connected to an endothermic side inlet 75 of a third heater 4, and an endothermic side outlet 76 of the third heater 4 is connected to an inlet 77 of the turbine 2, to complete the loop of the supercritical carbon dioxide cycle power generation subsystem. The carbon dioxide working fluid at an inlet of the second compressor 8 works under a pressure of 7.5-8.5 MPa at a temperature of 32-40°C to ensure that the carbon dioxide working fluid works under the supercritical condition.

The lithium extraction from brine unit includes a strainer 27. The brine raw material is first filtered by the strainer, the brine permeate from the strainer enters a desorber 26 of the absorption heat pump from an endothermic side inlet 58, the brine permeate from an endothermic side outlet 59 of the desorber 26 enters a condenser 20 from an endothermic side inlet 60, the brine permeate from an endothermic side outlet 61 of the condenser 20 enters an adsorption tower 11 from a brine inlet for adsorption, and then an adsorbent is washed with water to obtain a desorption liquid. The desorption liquid enters a nanofiltration membrane section 12 from the adsorption tower 11 for filtration, the filtered liquid from the nanofiltration membrane section 12 enters a preheater 13 from an endothermic side inlet 51 for preheating, the preheated liquid from an endothermic side outlet 52 of the preheater 13 enters the first heater 14 from an endothermic side inlet 40, and the heated liquid from an endothermic side outlet 41 of the first heater 14 enters a gas-liquid separator 15 from an inlet 42 to be separated into steam and concentrated brine. The steam from an outlet above the gas-liquid separator 15 is pumped as a heat source to an exothermic side inlet 54 of the preheater 13 to preheat brine therein. The concentrated brine below is pumped to an endothermic side inlet of the second heater 16 to be preheated together with the sodium carbonate solution from a sodium carbonate solution tank 17 to 70-90°C in the second heater 16. The brine and the sodium carbonate solution from an endothermic side outlet 45 of the second heater 16 enter a lithium precipitation reactor 18 for lithium precipitation reaction.

The coupling system of supercritical carbon dioxide cycle power generation and lithium extraction from brine of the present disclosure has the following advantages:
1) Compared with a separate supercritical carbon dioxide cycle, the consumption of cooling water used in the supercritical carbon dioxide cycle power generation in the coupling cycle is reduced by 50-80%.
2) The consumption of steam originally required for the evaporation concentration of the brine is completely avoided, thereby avoiding the energy consumption and equipment investment for steam production.
3) The temperature of the solution entering the lithium precipitation reactor is increased by 20-40°C, which can increase the yield from lithium precipitation by 5-20%, and can increase the purity of the obtained lithium carbonate by 3-7%.
4) The temperature of the brine in the adsorption section before entering the adsorption tower is increased by 40-50°C, which can increase the adsorption capacity of the adsorbent by 60-100%, and can increase the yield per unit time of the qualified liquid rich in lithium carbonate by 50-120%.

The total amount of available heat energy is increased through "quality in exchange for quantity" by using the absorption heat pump in the coupling system, thereby better achieving the energy level matching in the process of heating the brine with the carbon dioxide working fluid. The supercritical carbon dioxide working fluid from the carbon dioxide cycle cold end outlet 36 works at a temperature of about 180-220°C, which is suitable for use as the heating medium for increasing and maintaining the temperature during lithium precipitation and adsorption in the lithium extraction from brine system. After heat exchange in the lithium extraction from brine system, the supercritical carbon dioxide working fluid in the generator 19 releases heat from 120-150°C to 50-70°C, and the temperature of the brine through the desorber 26 and the condenser 20 is increased by 30-60°C. The coefficient of performance (COP) of the absorption heat pump is between 1.8 and 2.5. The operation of the system is flexible. The heat supply of the absorption heat pump can be adjusted with the cycle flow of the absorption heat pump working fluid.

The implementations of the present disclosure are described in detail above, but the present disclosure is not limited to the details in the foregoing implementations. Various simple variations may be made to the technical solutions of the present disclosure within the scope of the technical idea of the present disclosure, and such simple variations shall all fall within the protection scope of the present disclosure.

It should be additionally noted that, the technical features described in the foregoing implementations may be combined in any proper manner without conflict. To avoid unnecessary repetition, various possible combination manners are not described in the present disclosure.

In addition, different implementations of the present disclosure may also be arbitrarily combined without departing from the idea of the present disclosure, and these combinations shall still be regarded as content disclosed in the present disclosure.

## Claims

1. A coupling system of supercritical carbon dioxide cycle power generation and lithium extraction from brine, comprising an absorption heat pump unit (100), a supercritical carbon dioxide cycle power generation unit (200), and a lithium extraction from brine unit (300),
the absorption heat pump unit (100) comprising a driving heat source inlet (28), a driving heat source outlet (29), a to-be-heated material inlet (30), and a heated material outlet (31);
the lithium extraction from brine unit (300) comprising a brine inlet (32) and a lithium extraction device (301), and the lithium extraction device (301) comprises a raw material inlet (33), a heating medium inlet (34), and a heating medium outlet (35); the brine inlet (32) is in communication with the to-be-heated material inlet (30) of the absorption heat pump unit (100), and the heated material outlet (31) is in communication with the raw material inlet (33) of the lithium extraction device (301);
the supercritical carbon dioxide cycle power generation unit (200) comprising a carbon dioxide cycle cold end outlet (36) and a carbon dioxide cycle cold end inlet (37); and
the carbon dioxide cycle cold end outlet (36) being in communication with the heating medium inlet (34) of the lithium extraction from brine unit (300) and/or the driving heat source inlet (28) of the absorption heat pump unit (100), and the carbon dioxide cycle cold end inlet (37) of the supercritical carbon dioxide cycle power generation unit (200) being in communication with the heating medium outlet (35) of the lithium extraction from brine unit (300) and/or the driving heat source outlet (29).

2. The system according to claim 1, wherein the lithium extraction device (301) comprises an evaporation concentration device (302) and a lithium precipitation reaction device (303); the carbon dioxide cycle cold end outlet (36) is in communication with the heating medium inlet (34) of the evaporation concentration device (302); a heating medium outlet (38) of the evaporation concentration device (302) is in communication with a heating medium inlet (39) of the lithium precipitation reaction device (303); and the heating medium outlet (35) of the lithium precipitation reaction device (303) is in communication with the driving heat source inlet (28) of the absorption heat pump unit (100).

3. The system according to claim 2, wherein the evaporation concentration device (302) is a single-stage concentration device or a multi-stage concentration device.

4. The system according to claim 2 or 3, wherein the evaporation concentration device (302) comprises a first heater (14) and a gas-liquid separator (15); the lithium precipitation reaction device (303) comprises a second heater (16) and a lithium precipitation reactor (18); the lithium extraction from brine unit (300) further comprises an adsorption device and a membrane separation device that are in sequential communication; a lithium-rich permeate outlet of the membrane separation device is in communication with an endothermic side inlet (40) of the first heater (14); an endothermic side outlet (41) of the first heater (14) is in communication with an inlet (42) of the gas-liquid separator (15); a liquid phase outlet (43) of the gas-liquid separator (15) is in communication with an endothermic side inlet (44) of the second heater (16); an endothermic side outlet (45) of the second heater (16) is in communication with a raw material inlet (46) of the lithium precipitation reactor (18); and
the carbon dioxide cycle cold end outlet (36) is in communication with an exothermic side inlet (47) of the first heater (14); an exothermic side outlet (48) of the first heater (14) is in communication with an exothermic side inlet (49) of the second heater (16); and an exothermic side outlet (50) of the second heater (16) is in communication with the driving heat source inlet (28) of the absorption heat pump unit (100).

5. The system according to claim 4, wherein the lithium extraction device (301) further comprises a preheater (13); an endothermic side inlet (51) of the preheater (13) is in communication with the lithium-rich permeate outlet of the membrane separation device; an endothermic side outlet (52) of the preheater (13) is in communication with the endothermic side inlet (40) of the first heater (14); and a gas phase outlet (53) of the gas-liquid separator (15) is in communication with an exothermic side inlet (54) of the preheater (13).

6. The system according to claim 4 or 5, wherein the adsorption device comprises a to-be-adsorbed material inlet, and the brine inlet (32) is in communication with the to-be-adsorbed material inlet of the adsorption device.

7. The system according to any one of claims 4 to 6, wherein the adsorption device comprises an adsorption tower (11), and the membrane separation device comprises a nanofiltration membrane section (12).

8. The system according to any one of claims 2 to 7, wherein the lithium precipitation reaction device (303) further comprises a sodium carbonate solution inlet (55), and the sodium carbonate solution inlet (55) is in communication with the endothermic side inlet (44) of the second heater (16).

9. The system according to claim 8, wherein the sodium carbonate solution inlet (55) is in communication with a sodium carbonate solution tank (17).

10. The system according to any one of claims 1 to 9, wherein the lithium extraction from brine unit (300) further comprises a strainer (27), and the strainer (27) is disposed between the brine inlet (32) and the to-be-heated material inlet (30) of the absorption heat pump unit (100).

11. The system according to any one of claims 1 to 10, wherein the absorption heat pump unit (100) comprises a first type of absorption heat pump (101), and the first type of absorption heat pump comprises a generator (19), a condenser (20), an absorber (25), and a desorber (26);
an exothermic side inlet (56) of the generator (19) forms the driving heat source inlet (28) to be in communication with the heating medium outlet (35) of the lithium extraction from brine unit (300); an exothermic side outlet (57) of the generator (19) forms the driving heat source outlet (29) to be in communication with the carbon dioxide cycle cold end inlet (37); and
an endothermic side inlet (58) of the desorber (26) forms the to-be-heated material inlet (30) to be in communication with the brine inlet (32), an endothermic side outlet (59) of the desorber (26) is in communication with an endothermic side inlet (60) of the condenser (20) of the absorption heat pump unit (100), and an endothermic side outlet (61) of the condenser (20) forms the heated material outlet (31) to be in communication with the raw material inlet (33) of the lithium extraction device (301).

12. The system according to claim 11, wherein the first type of absorption heat pump (101) is a water and lithium bromide heat pump and/or an ammonia and water heat pump.

13. The system according to claim 11 or 12, wherein the first type of absorption heat pump (101) further comprises a solution exchanger (21), a steam valve (22), a solution pump (23), and a solution valve (24).

14. The system according to any one of claims 11 to 13, wherein the first type of absorption heat pump (101) is a single-stage absorption heat pump or a multi-stage absorption heat pump.

15. The system according to any one of claims 1 to 14, wherein the supercritical carbon dioxide cycle power generation unit (200) further comprises an electric generator (1), a turbine (2), a high-temperature regenerator (3), and a low-temperature regenerator (5); the electric generator (1) is coaxially connected to the turbine (2); an outlet (62) of the turbine (2), an exothermic side inlet (63) and an exothermic side outlet (64) of the high-temperature regenerator (3), and an exothermic side inlet (65) of the low-temperature regenerator (5) are in sequential communication; an exothermic side outlet (66) of the low-temperature regenerator (5) is in communication with the carbon dioxide cycle cold end outlet (36).

16. The system according to claim 15, wherein the supercritical carbon dioxide cycle power generation unit (200) further comprises a cooler (10), a first compressor (6), and a third heater (4); the carbon dioxide cycle cold end inlet (37), an exothermic side inlet (67) and an exothermic side outlet (68) of the cooler (10), and an inlet (69) of the first compressor (6) are in sequential communication; an outlet (70) of the first compressor (6), an endothermic side inlet (71) and an endothermic side outlet (72) of the low-temperature regenerator (5), an endothermic side inlet (73) and an endothermic side outlet (74) of the high-temperature regenerator (3), and an endothermic side inlet (75) of the third heater (4) are in sequential communication; an endothermic side outlet (76) of the third heater (4) is in communication with an inlet (77) of the turbine (2).

17. The system according to claim 15 or 16, wherein the supercritical carbon dioxide cycle power generation unit (200) further comprises a three-way diverting control valve (7), a three-way mixing control valve (9) and a second compressor (8); an inlet (78) of the three-way diverting control valve (7) is in communication with the exothermic side outlet (66) of the low-temperature regenerator (5); a first outlet (79) of the three-way diverting control valve (7) forms the carbon dioxide cycle cold end outlet (36), and a second outlet (80) of the three-way diverting control valve (7) is in communication with an inlet (81) of the second compressor (8); and
an outlet (82) of the second compressor (8) is in communication with a first inlet (83) of the three-way mixing control valve (9), a second inlet (84) of the three-way mixing control valve (9) is in communication with the endothermic side outlet (72) of the low-temperature regenerator (5), and an outlet (85) of the three-way mixing control valve (9) is in communication with the endothermic side inlet (73) of the high-temperature regenerator (3).

18. The system according to claim 17, wherein the three-way diverting control valve (7) is configured to control a flow rate of carbon dioxide used in the lithium extraction from brine unit (300).

19. The system according to any one of claims 1 to 18, wherein the supercritical carbon dioxide cycle power generation unit (200) is a recompression supercritical carbon dioxide cycle power generation unit.

20. The system according to any one of claims 1 to 18, wherein the supercritical carbon dioxide cycle power generation unit (200) is a simple-regenerative-cycle supercritical carbon dioxide cycle power generation unit or a partial-cooling-cycle supercritical carbon dioxide cycle power generation unit.
